# FASCICULE DE BREVET EUROPEEN

(11) **EP 0 790 855 B1**
(45) Date de publication et mention de la délivrance du brevet: **27.03.2002**
(21) Numéro de dépôt: 96930221.5
(22) Date de dépôt: 06.09.1996
(51) Int. Cl.: B01D 53/04, B01J 20/34

(54) **PROCEDE ET DISPOSITIF POUR EPURER DES VEINES D'EFFLUENTS GAZEUX CHARGEES DE SUBSTANCES POLLUANTES**
METHODE UND VORRICHTUNG ZUR REINIGUNG VON GASFÖRMIGEN, VERUNREINIGUNGEN ENTHALTENDEN EFFLUENTSTRÖMEN
METHOD AND DEVICE FOR PURIFYING GASEOUS EFFLUENT STREAMS CONTAINING POLLUTANTS

(30) Priorité: 07.09.1995 FR 9510591
(43) Date de publication de la demande: 27.08.1997
(73) Titulaire: INSTITUT FRANCAIS DU PETROLE, 92500 Rueil Malmaison (FR); Bourcier, Jacques, 44600 Saint-Nazaire (FR)
(72) Inventeur: BOURCIER, Jacques, F-44600 Saint-Nazaire (FR); MORLEC, Jean, F-44600 Saint-Nazaire (FR)
(86) Numéro de dépôt international: FR9601367
(87) Numéro de publication internationale: WO9709109

(56) Documents cités:
- FR-A- 2 429 035
- FR-A- 2 659 869
- FR-A- 2 691 234
- US-A- 5 057 128
- US-A- 5 064 453
- US-A- 5 227 598

## Description

La présente invention concerne un procédé et un dispositif pour épurer des veines d'effluents gazeux.

Le procédé et le dispositif selon l'invention trouvent des applications notamment pour l'élimination des Composés Organiques Volatils, ci-après désignés par COV, ou de substances malodorantes. Sous le terme de COV, on range les hydrocarbures, les composés chlorés, fluorés et chloro-florés, les NOx, les SOx, H2S et mercaptans, NH3 et amines, y compris H2O, et, d'une façon générale, tous les composés organiques et minéraux qui peuvent être présents dans l'air à des concentrations gênantes à divers titres.

Mieux respecter l'environnement devient une des préoccupations importantes de nombreux industriels, qui doivent faire face à un renforcement des réglementations portant sur les rejets polluants dans l'atmosphère.

### ÉTAT DE LA TECHNIQUE

Il existe dans l'industrie de nombreux appareils d'épuration des effluents gazeux procédant essentiellement par adsorption des substances polluantes sur des matériaux adsorbants ou encore par séparation terminale au travers d'un filtre. Après épuration au contact de l'adsorbant, les effluents épurés peuvent être rejetés dans l'atmosphère ou bien encore recyclés à l'intérieur des locaux au moins durant les périodes hivernales, afin de diminuer les dépenses de chauffage.

Dans certains types d'appareils, utilisant par exemple des filtres à charbon actif agissant selon le principe d'attraction moléculaire et de rétention par chimisorption, les adsorbants ne sont pas régénérables et doivent être remplacés dès que leur seuil de saturation est atteint. Le charbon actif granulaire utilisé dans certains autres filtres, peut être regénéré en usine à condition de le retourner au fabricant. Quelques journées d'activité de l'installation polluante suffisent parfois pour atteindre ce seuil de saturation quand la concentration initiale de substances polluantes est élevée. Le coût de l'adsorbant ou sa régénération devient vite prohibitif. Cette solution des filtres avec des consommables non régénérables est de toute façon inacceptable dans un éco-bilan car on se contente en l'occurrence de transferer la pollution d'un support à un autre sans l'éliminer. Du fait des coûts de remplacement, du manque d'information et parfois de difficultés de contrôle de l'état des appareils, il arrive souvent que les filtres ne soient pas changés aussi fréquemment qu'ils devraient l'être.

Il existe aussi des appareils d'épuration avec régénération de l'adsorbant par désorption et récupération ou destruction des substances polluantes. Mais ces appareils sont souvent plus coûteux. Ils conviennent plutôt pour des installations générant de grandes quantités de substances polluantes. De tels appareils, dans de nombreux cas ne constituent pas le plus souvent des solutions économiquement acceptables. Aussi, nombre d'installations ne sont pas équipées de façon adéquate.

Par le brevet US 3.608.273 par exemple ou les demandes de brevet FR-A-2.659.869 et FR-A-2 709.431, on connait des procédés de traitement de fluides chargés de substances à éliminer consistant essentiellement à faire passer ces fluides dans des cuves au travers d'une série de couches filtrantes espacées les unes des autres et contenant en matériau adsorbant tel que du charbon actif par exemple. On utilise un matériau adsorbant électriquement conducteur ou rendu conducteur par adjonction de particules conductrices ou de fils électriques chauffants. La désorption de l'adsorbat est effectuée en le chauffant, au moyen d'un courant électrique au travers ou bien d'un champ électro-magnétique produit au moyen d'un bobinage. On peut utiliser deux ensembles de couches filtrantes et utiliser l'un en adsorption tandis que l'autre est régénérée.

Par la demande de brevet FR-94/06.281 des demandeurs, on connait un dispositif d'épuration en continu d'effluents pollués. Il comporte une couronne d'axe vertical cloisonnée intérieurement et chargée d'un matériau solide particulaire adsorbant les substances polluantes : silice, charbon actif, alumine ou autres, en rotation continue à l'intérieur d'une cage. Une circulation permanente d'effluents gazeux est établie d'une part entre un conduit d'amenée d'effluents et une conduite d'échappement dans la zone centrale via un premier secteur angulaire d'adsorption de la couronne, et d'autre part entre un conduit d'amenée d'un flux gazeux chaud dans cette même zone et un conduit d'évacuation via un deuxième secteur angulaire de désorption de la couronne, où l'adsorbat est régénéré. Les conduits sont raccordés à des moyens d'échange et/ou d'incinération thermique extérieurs. Ce dispositif peut être associé à de nombreux types d'installations polluantes, mais il est plus particulièrement destiné à celles qui produisent des débits relativement importants d'effluents pollués (de 10.000 à 100.000 m3/h par exemple).

Le dispositif d'épuration de substances mêlées à des effluents gazeux, selon l'invention, comporte une enceinte, un premier conduit pour canaliser les effluents dans l'enceinte, des moyens d'épuration pour retenir et concentrer les substances, au moins un deuxième conduit pour l'évacuation hors de l'enceinte des effluents filtrés et des moyens (tels qu'un ventilateur) à l'intérieur de l'enceinte par exemple, pour une épuration autonome, ou à l'extérieur si le dispositif d'épuration est intégré dans un procéssus global existant pour établir une circulation d'effluents au travers de l'enceinte.

Il est caractérisé en ce que les moyens d'épuration comportent une barrière d'épuration fixe interposée en travers de l'enceinte et comprenant une pluralité d'unités d'épuration disposées parallèlement les unes aux autres, contenant un matériau adapté à adsorber les substances, et un ensemble de désorption thermique sélective permettant l'application d'un fluide de désorption à débit relativement faible, à au moins une unité d'épuration, comprenant un collecteur mobile déplaçable linéairement dans l'enceinte, adapté à capter sélectivement tout le fluide de désorption issu de cette unité d'épuration, et des moyens de chauffage du matériau adsorbant de chaque unité d'épuration à désorber.

Le dispositif peut comporter en outre des moyens tel que un réacteur d'incinération placé de préférence dans l'enceinte et solidaire en translation du collecteur, pour éliminer les substances mêlées au fluide de désorption.

Suivant un mode de réalisation, le dispositif comporte un circuit de ventilation partiellement à l'extérieur de l'enceinte pour établir sélectivement une circulation du fluide de désorption au travers de chaque unité d'épuration à désorber. Ce circuit comporte par exemple au moins une canalisation auxiliaire déplaçable en même temps que le collecteur mobile, pour amener vers chaque unité d'épuration sélectionnée, le fluide de désorption et/ou éventuellement au moins une canalisation auxiliaire déplaçable aussi en même temps que le collecteur mobile, pour conduire hors de l'enceinte le fluide de désorption issu de l'unité d'épuration sélectionnée.

Suivant un mode de réalisation, les moyens de chauffage du matériau adsorbant (à résistances électriques au sein de l'adsorbant ou par effet Joule par exemple), sont inclus dans chaque unité d'épuration.

Suivant un autre mode de réalisation, une partie des moyens de chauffage est disposée à l'extérieur de chaque unité d'épuration et peut être constituée d'une source de rayons infra-rouges, telle que par exemple un réacteur d'incinération à la sortie de l'unité d'épuration à désorber.

Suivant un mode de réalisation, chaque unité d'épuration comporte plusieurs panneaux perforés contenant de l'adsorbant et des cloisons de déviation pour accroître la surface de contact des effluents avec le matériau adsorbant.

De préférence, l'ensemble de désorption comporte des moyens moteurs pour positionner le collecteur face à toute unité d'épuration à désorber et le plaquer contre elle.

Le procédé d'épuration de substances mêlées à des effluents gazeux, selon l'invention, est caractérisé en ce que l'on établit une circulation des effluents au travers d'un dispositif comportant une batterie d'unités d'épuration juxtaposées dans une enceinte, contenant chacune des matériaux adsorbant lesdites substances, on isole sélectivement et successivement au moyen d'un collecteur mobile les différentes unités d'épuration quand leur charge adsorbante est saturée, le temps nécessaire à leur désorption par chauffage et au transfert des substances par un fluide auxiliaire (une fraction des effluents en circulation par exemple ou un gaz amené sélectivement à l'entrée de l'unité d'épuration à désorber par un circuit auxiliaire), et éventuellement on transfère les substances mêlées au fluide auxiliaire vers un réacteur adapté à les éliminer.

Le dispositif selon l'invention fournit une solution simple et d'un coût d'achat et d'entretien modéré, compatible avec nombre d'installations génératrices d'effluents polluants d'importance moyenne (de 1000 à 5000 m3/h par exemple), ceci en raison de nombreux facteurs :
- l'enceinte peut être réalisée de façon économique dans le même matériau que celui utilisé pour fabriquer les conduits principaux et auxiliaires (gaînes aérauliques), avec une forme parallélépipède à section constante, qui est courante et facile à assembler. On peut utiliser par exemple l'acier galvanisé, le polyester ou bien, si nécessaire, l'acier inoxydable;
- les pièces mobiles sont peu nombreuses, l'ensemble de désorption avec son collecteur mobile et ses conduits auxiliaires éventuels pouvant être facilement translatés par des moyens électriques, pneumatiques ou hydrauliques;
- les fortes élévations de températures nécessaires à la désorption sont localisées dans le réacteur thermique et dans une seule unité de désorption. Comme ces unités d'épuration sont isolées thermiquement les unes des autres et de la carrosserie de l'enceinte, il n'est pas néccessaire de calorifuger celle-ci.

L'incinération des polluants est de préférence effectuée à l'intérieur de l'enceinte, au voisinage immédiat de l'unité d'épuration à désorber, avec cet avantage que la chaleur de désorption peut être en partie fournie par rayonnement infra-rouge.
- Les opérations de désorption et d'incinération éventuelle peuvent être facilement différées aux "heures creuses" ce qui diminue la dépense en énergie nécessaire;
- la concentration et la nature des substances polluantes, ainsi que la température des effluents peut varier dans de notables proportions sans nuire à l'efficacité du traitement;
- le dispositif restant statique durant toutes les phases de fonctionnement, l'enceinte étant mise en dépression pour établir la circulation à l'intérieur, aucune fuite vers l'extérieur n'est possible;
- la simplicité de construction, d'utilisation, de fonctionnement, facilitent la maintenance et limitent la fréquence d'intervention et de contrôle;
- les moyens de désorption n'ont pas à être doublés comme dans les procédés classiques.

D'autres caractéristiques et avantages du dispositif selon l'invention, apparaîtront à la lecture de la description ci-après de modes de réalisation décrits à titre d'exemples non limitatifs, convenant plus particulièrement pour des applications de purification d'effluents pollués, en se référant aux dessins annexés où :
- la Fig.1 montre une vue d'ensemble en coupe partielle du dispositif;
- la Fig.2 montre schématiquement une variante du mode de réalisation de la Fig.1 avec conduit d'admission d'un flux auxilaire de désorption;
- la Fig.3 montre schématiquement une variante du mode de réalisation de la Fig. 1 avec conduit d'admission d'un flux auxilaire de désorption et conduit d'évacuation du flux de désorption vers un réacteur d'incinération extérieur;
- la Fig.4 montre schématiquement les moyens moteurs permettant le déplacement de l'ensemble de désorption;
- la Fig.5 montre schématiquement un premier mode de réalisation d'une unité d'épuration à plusieurs compartiments;
- la Fig.6 montre une variante du mode de réalisation de la Fig.5; et
- la Fig.7 montre une autre variante du mode de réalisation de la Fig.5.

### MODES DE RÉALISATION

Comme on va le décrire en détail ci-après, le procédé selon l'invention consiste essentiellement à disposer une batterie d'unités d'épuration juxtaposées contenant des matériaux adsorbants, sur le trajet d'une circulation d'effluents à traiter et d'isoler successivement au moyen d'un collecteur chacune des unités quand sa charge adsorbante est saturée, le temps nécessaire à sa désorption par chauffage et au transfert par un fluide auxiliaire, des substances retenues par l'adsorbant. Le procédé peut s'appliquer à la deshumidification de gaz ou à la purification d'effluents contenant des substances polluantes. Dans ce cas, le procédé comporte de préférence le transfert des substances vers un réacteur d'incinération placé par exemple au voisinage immédiat de l'unité en cours de désorption.

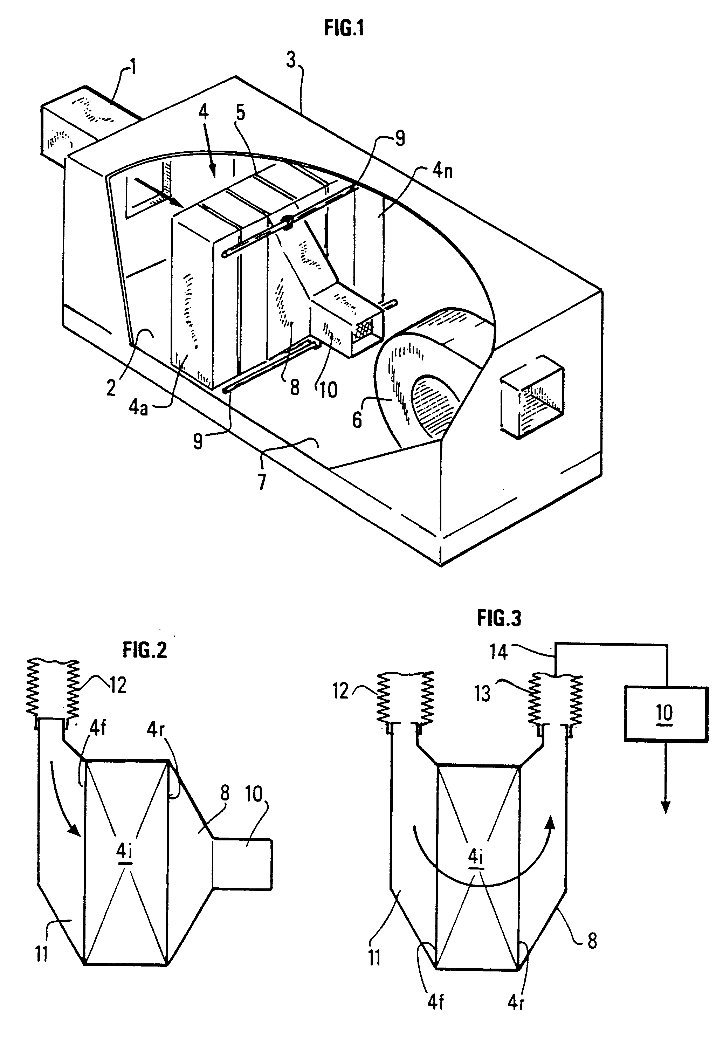

L'effluent pollué à traiter est amené par une gaîne 1 dans une chambre d'admission 2 à une première extrémité d'une enceinte rigide monobloc 3 (Fig.1) qui peut être de forme parallélépipédique par exemple et réalisée, pour un usage général, en acier galvanisé. Toute la section transversale de l'enceinte est fermée par une barrière d'épuration 4 constituée d'une série d'unités d'épuration 4a à 4n (n étant égal à 11 par exemple) juxtaposées séparées les unes des autres par des couches réalisées en un matériau thermiquement isolant 5. Chacune de ces unités d'épuration contient un matériau adsorbant adapté à la nature de la substance mêlée à l'effluent à traiter, notamment sous forme de molécules polluantes. Ce matériau adsorbant peut être exemple du charbon actif, des zéolites etc., comme on le verra plus en détail par la suite.

La circulation de l'effluent au travers des unités d'épuration 4a à 4n, est assurée par un ventilateur 6, disposé dans une chambre d'extraction 7 du côté de la barrière d'épuration 4 opposé à la chambre d'admission 2, ou éventuellement à l'extérieur de l'enceinte dans le cas où le dispositif d'épuration est intégré dans un ensemble global. L'effluent purifié après son passage au travers de la barrière 4 est rejeté à l'extérieur de l'enceinte 3 soit dans l'atmosphère extérieure soit recyclé dans le local où il a été aspiré.

A intervalles réguliers dépendant de la vitesse de saturation de la charge de matériau adsorbant dans chaque unité d'épuration, il faut procéder à sa regénération. Le dispositif comporte à cet effet, un ensemble de désorption thermique sélective permettant d'isoler sélectivement au moins une unité d'épuration de la barrière filtrante 4, le temps nécessaire à la désorption.

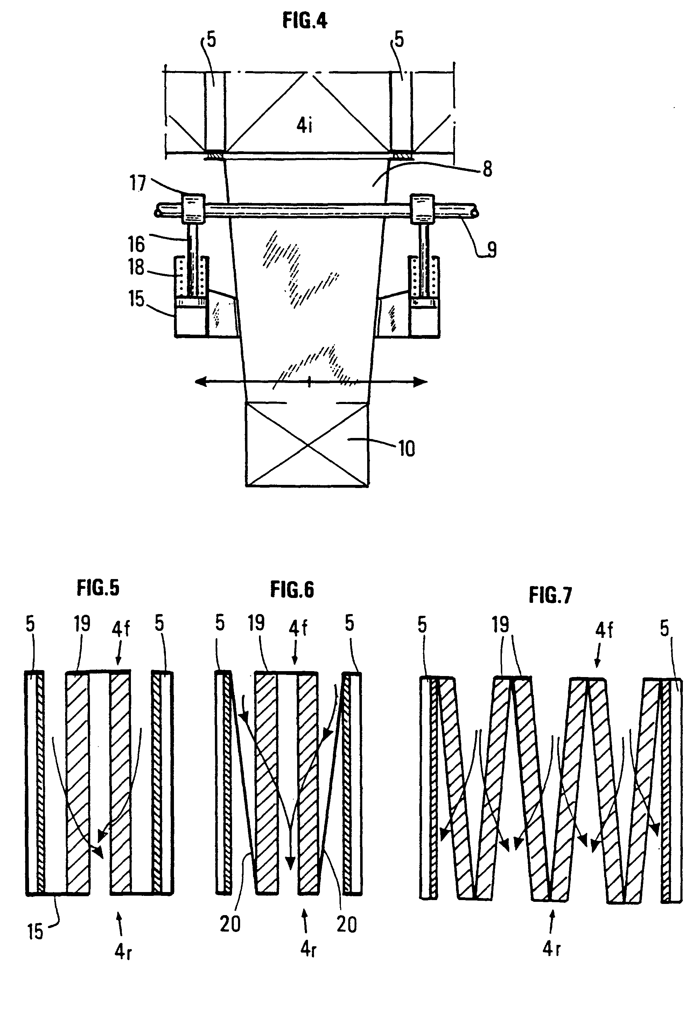

Cet ensemble comporte un collecteur mobile convergeant 8 dont l'entrée est adaptée à venir s'appliquer contre toute la face postérieure d'une unité d'épuration 4a à 4n. Ce collecteur est mobile transversalement le long de rails de guidage 9 sous l'action de moyens moteurs (Fig.4).

L'ensemble de désorption comporte également des moyens de chauffage de la charge d'adsorbant à l'intérieur ou à l'extérieur de chaque unité d'épuration. Quand l'adsorbant utilisé est granulaire, on peut utiliser à cet effet des résistances électriques fixes (non représentées) noyées dans la masse. Si l'adsorbant est contenu dans une structure en nid d'abeille, ou sous forme textile ou même granulaire de faible épaisseur, on peut utiliser aussi des émetteurs de rayons infra-rouges mobiles avec le collecteur 8, qui peuvent être amenés en regard des faces antérieure et postérieure d'une unité d'épuration à désorber. Les ondes thermiques pénètrent en profondeur axialement dans les alvéoles et l'adsorbant qui est très poreux chauffe rapidement. Avec ce type de radiations, l'essentiel de la chaleur va à l'adsorbant. réchauffement de l'air étant dû à la seule conduction matière/gaz.

Lorsque le matériau adsorbant est suffisamment conducteur de l'électricité, un autre mode de chauffage peut consister encore à appliquer une différence de potentiel entre les faces antérieure et postérieure et à le chauffer par effet Joule.

Les particules polluantes libérées par chauffage du matériau sont entraînées hors de l'unité d'épuration par un fluide à faible débit de façon à obtenir à la sortie un taux de désorption important. Différents moyens seront décrits ultérieurement en relation avec les Fig 2, 3.

A la sortie du collecteur convergent, est placé un réacteur 10 d'incinération des substances polluantes entraînées par le fluide auxilaire.

La destruction peut être obtenue thermiquement à haute température (1000°C par exemple). Dans ce cas, on utilise une chambre de combustion contenant par exemple un matelas de fils conducteurs avec une forte surface spécifique : 1500 m2/m3 par exemple, qui sont portés à incandescence par application d'un courant électrique, l'oxydation se faisant au contact de ces fils. La réaction est suffisamment exotherme pour entretenir l'incandescence à elle seule et aucun apport d'énergie électrique n'est plus nécessaire.

La destruction peut encore être obtenue à une température moindre (de l'ordre de 400°C) dans un réacteur catalytique d'oxydation d'un type connu contenant par exemple un bloc de catalyseur en nid d'abeille, le gaz s'oxydant à son contact. Dans un tel réacteur, on utilise des moyens auxiliaires de chauffage tel qu'un brûleur par exemple, pour atteindre la température de démarrage de l'oxydation qui s'entretient ensuite par auto-thermicité de l'oxydation.

Comme fluide auxiliaire de désorption, on peut utiliser l'effluent lui-même, entrant dans l'enceinte 3, (Fig.1), à condition de réduire fortement la puissance de commande du ventilateur 6 pendant la phase de regénération. Ce mode de mise en oeuvre convient par exemple dans les installations où il se produit des baisses cycliques du taux de pollution de l'effluent (durant la nuit par exemple lorsque cette pollution est liée à des activités diurnes par exemple).

Comme fluide auxiliaire de désorption, on peut utiliser également une fraction de l'effluent lui-même. Le débit de régénération par unité de surface. plus faible comparativement, est obtenu par auto-équilibrage du circuit du fait de la plus forte perte de charge dans la succession d'éléments en désorption, par rapport au seul moyen d'adsorption. Ce principe ne nécessite qu'un seul ventilateur.

Lorsque le taux de pollution de l'effluent reste trop élevé pour qu'on puisse s'en servir comme fluide auxiliaire, on peut utiliser par exemple le mode de réalisation de la Fig.2 qui comporte un divergent 11 dont la sortie est conformée pour s'appliquer contre toute la face antérieure de chaque unité d'épuration 4i, et dont l'entrée est raccordée à un conduit souple 12 communiquant extérieurement à l'enceinte 3, avec une source de fluide (non représentée) telle qu'un ventilateur d'air frais par exemple. De préférence, ce divergent est couplé avec le collecteur de l'autre côté de la barrière d'épuration 4 et il se déplace avec elle et le réacteur d'incinération 8.

Suivant la variante de la Fig.3, le réacteur d'incinération 10, ou un dispositif de récupération, peut éventuellement être placé à l'extérieur de l'enceinte. Dans ce cas, la sortie du collecteur 8 est raccordée également à un conduit souple 13 et un circuit 14 de connexion au réacteur 10.

Les moyens moteurs permettant de déplacer le collecteur 8, le réacteur 10 (Fig. 1) et/ou le divergeant 11 (Fig.2, 3) comportent par exemple (Fig.4) :
- des moyens de guidage linéaire 9 d'un type connu comprenant par exemple des glissières cylindriques à billes ou sur feutre, des rails de roulement pour des galets ou d'autres mécanismes courants de guidage permettant un déplacement linéaire dans un seul degré de translation,
- des éléments moteurs d'un type connu (non représentés) comprenant par exemple, des roues dentées (resp. des pignons crantés) coopérant avec une chaine (resp. une courroie crantée) et un moteur électrique, hudraulique ou pneumatique, ou bien une roue caoutchoutée roulant sur un chemin de roulement fixe, un pignon à engrenage roulant sur une règle linéaire à denture ou bien encore un vérin pneumatique avec renvoi par filin et réa, ou d'une manière générale tout dispositif d'entraînement d'usage courant pour un homme de métier,
- un mécanisme de translation longitudinale permettant de plaquer le collecteur 8 contre une unité d'épuration 4i à désorber. Le collecteur 8 est solidaire du corps 15 de deux vérins hydrauliques (ou pneumatique) dont les tiges 16 sont rigidement reliées respectivement à deux bagues 17, lesquelles sont montées coulissantes sur les rails de guidage 9. Des ressorts de rappel 18 sont intercalés entre le corps et la tige de chaque vérin, avec pour effet de plaquer en permanence le collecteur 8 contre la face arrière 4r de l'unité d'épuration à désorber. Le retrait intermittent du collecteur 8, le temps nécessaire à son transfert devant une autre unité d'épuration, est obtenu en appliquant aux vérins une pression hydraulique fournie par un générateur (non représenté).

Suivant des variantes possibles de réalisation connus du technicien, le mécanisme peut comporter par exemple un électro-aimant avec ressort de rappel ou un palpeur glissant sur une came fixe, portant à intervalles réguliers des bossages, des taquets, dont la position et la hauteur sont adaptés aux retraits souhaités.

L'arrêt du collecteur 8 devant la face postérieure d'une unité d'épuration choisie, peut être obtenu classiquement en contrôlant la distance de translation nécessaire par exemple au moyen d'un ensemble de pilotage (non représenté) ou bien encore en utilisant un moteur électrique de déplacement linéaire pourvu d'un limiteur de couple et en levant devant l'unité d'épuration choisie une butée d'arrêt provoquant l'arrêt du moteur. A cet ensemble de pilotage, on peut associer des capteurs adaptés à détecter la saturation de l'adsorbant dans chaque unité d'épuration, de façon à automatiser les cycles de régénération.

Comme matériaux d'adsorption, on peut utiliser par exemple :
- des zéolithes naturelles en grain,
- des zéolithes de synthèse, désaluminée et/ou greffée,
- des zéolithes imprégnées sur support en nid d'abeille ou sur subjectile métallique,
- des zéolithes ou C.A. (charbon actif) ensachés dans des bernicats,
- des C.A. en grains
- des tissus, feutres ou tricots métalliques ou polymériques revêtus de zéolithe ou de CA,
- des tissus de carbone activé (TCA).

Suivant le mode de réalisation de la Fig.5, chaque unité d'épuration 4a à 4n comporte plusieurs compartiments plats 19 disposés parallèlement ou en accordéon entre les faces antérieure et postérieure 4f et 4r de la barrière d'épuration 4, avec un espacement entre eux. Chacun d'eux est délimité latéralement par des toles perforées et rempli d'un matériau adsorbant tel que du charbon actif par exemple. Certaines entrées et sorties sur les faces antérieure 4f et postérieure 4r sont fermées de façon à allonger le trajet des effluents et augmenter ainsi leur surface de contact avec l'adsorbant.

Cette déviation des flux peut être obtenue aussi (Fig.6) par des toles déflectrices 20 disposées en biais entre les différents compartiments. Cette disposition est favorable à la transmission du rayonnement infra-rouge quand on utilise ce mode de chauffage pour désorber l'adsorbant des différents compartiments.

Suivant la variante de la Fig.7, chaque unité d'épuration comporte une pluralité de compartiments plats 19 disposés en zig-zag de façon à contraindre l'effluent de les traverser.

Le dispositif, tel qu'il a été décrit, peut être mis en oeuvre dans de nombreux domaines d'activité et notamment :
- chez les carrossiers automobiles pour l'élimination des solvants provenant de cabines de peinture;
- dans les postes de relevage d'eaux usées situés en ville, pour l'élimination de l'hydrogène sulfuré;
- dans les ateliers de plasturgie pour l'épuration des effluents gazeux chargés de styrène;
- dans les stations d'épuration pour le traitement des odeurs provenant du local filtre à boues;
- chez les artisans peintres pour capter, épurer, recycler les effluves solvantées (colle néoprène) in situ;
- dans le bâtiment et les travaux publics (BTP) pour le traitement des lieux confinés avec recyclage de l'air possible pendant l'application des résines époxydiques ou des mousses de polyuréthane ;
- dans l'imprimerie pour épurer des rejets gazeux chargés de COV;
- dans des ateliers agro-alimentaires pour la destruction des odeurs;
- dans les industries agro-alimentaires pour la préparation d'air exempt de polluants (NOx, C2H4);
- dans les services d'urgence où l'on a besoin d'un dispositif mobile autonome;
- dans toutes les industries où l'on a besoin d'un air purifié;
- dans les processus de production chimique pour épurer des effluents gazeux;
- dans des laboratoires d'essais pour épurer des effluents gazeux également, avant leur rejet dans l'atmosphère;
- dans des ateliers de mécanique pour traiter des locaux de travail permettant un recyclage autorisé.

On a décrit des modes de réalisation où le dispositif est utilisé pour purifier un effluent chargé de substances ou particules polluantes (des C.O.V notamment). On ne sortirait pas du cadre de l'invention toutefois en utilisant le dispositf pour déshumidifier un gaz. Dans un tel cas, la charge des différentes unités de la barrière d'épuration 4 est constituée d'un adsorbant hydrophile : zéolites naturelles ou de synthèse, silicagel, silice, alumine, silice-alumine, chlorure de calcium ou chlorure de lithium etc. ou tous autres matériaux hydropohiles de grande surface active.

## Revendications

1. Dispositif pour épurer des effluents gazeux contenant des substances indésirables, comportant une enceinte (3), un premier conduit (1) pour canaliser les effluents vers une barrière d'épuration disposée au travers de l'enceinte, comprenant une pluralité d'unités d'épuration (4a à 4n) contenant un matériau adapté à adsorber et concentrer les dites substances, au moins un deuxième conduit pour l'évacuation hors de l'enceinte des effluents filtrés et des moyens (6) pour établir une circulation d'effluents au travers de l'enceinte, **caractérisé en ce qu'**il comporte un ensemble combiné mobile (8, 10) disposé dans l'enceinte en aval de la barrière d'épuration (4), coopérant avec un moyen d'amenée d'un fluide de désorption en amont de la barrière, qui réalise à la fois une désorption thermique sélective d'au moins une unité d'épuration et une destruction des substances obtenues par la désorption sélective.

2. Dispositif selon la revendication 1, **caractérisé en ce que** l'ensemble combiné mobile comporte un réacteur (10) d'incinération des substances obtenues par la désorption sélective, associé à un collecteur (8) et à des moyens de translation.

3. Dispositif selon la revendication 2, **caractérisé en ce que** le réacteur d'incinération (10) est du type catalytique.

4. Dispositif selon l'une des revendications 1 à 3, **caractérisé en ce que** le moyen d'amenée du fluide de désorption est le premier conduit (1) canalisant les effluents à épurer.

5. Dispositif selon l'une des revendications 1 à 3, **caractérisé en ce que** le moyen d'amenée du fluide de désorption est un conduit aéraulique (12) partiellement à l'extérieur de l'enceinte connecté à un divergent (11) déplaçable avec le combiné mobile.

6. Dispositif selon l'une des revendications précédentes, **caractérisé en ce que** l'ensemble combiné mobile (8, 10) comporte des moyens de chauffage du matériau adsorbant inclus dans chaque unité d'épuration.

7. Dispositif selon la revendication 6, **caractérisé en ce que** les moyens de chauffage comportent un ensemble de résistances électriques au sein de l'adsorbant.

8. Dispositif selon la revendication 6, **caractérisé en ce que** les moyens de chauffage sont du type à effet Joule.

9. Dispositif selon l'une des revendications précédentes, **caractérisé en ce que** l'ensemble combiné mobile (8, 10) comporte des moyens de chauffage disposés à l'extérieur de chaque unité d'épuration.

10. Dispositif selon l'une des revendications précédentes, **caractérisé en ce que** les moyens de chauffage comportent au moins une source de rayons infra-rouges.

11. Dispositif selon les revendications 2 à 9, **caractérisé en ce que** les moyens de chauffage comportent au moins une source de rayons infra-rouges constitué par le réacteur d'incinération (10).

12. Dispositif selon l'une des revendications précédentes, **caractérisé en ce que** chaque unité d'épuration comporte plusieurs compartiments perforés (19) contenant de l'adsorbant et des cloisons déflectrices (20) pour accroître la surface de contact des effluents avec le matériau adsorbant.

13. Dispositif selon l'une des revendications précédentes, **caractérisé en ce que** l'ensemble de désorption thermique sélective comporte des moyens moteurs pour positionner le collecteur face à toute unité d'épuration à désorber et le plaquer contre elle.

14. Procédé pour épurer des effluents gazeux contenant des substances indésirables, dans lequel on conduit les effluents à épurer vers une barrière d'épuration disposée au travers d'une enceinte, comprenant une pluralité d'unités d'épuration (4a à 4n) contenant un matériau adapté à adsorber et concentrer les dites substances, et on isole sélectivement et successivement au moyen d'un collecteur mobile (8) les différentes unités d'épuration quand leur charge adsorbante est saturée. pour y faire passer un fluide de désorption, **caractérisé en ce qu'**il comporte une désorption thermique sélective d'au moins une unité d'épuration combinée avec une destruction des substances obtenues par la désorption sélective, à l'intérieur de l'enceinte.

15. Procédé selon l'une des revendications 14, **caractérisé en ce que** le fluide de désorption est une fraction des effluents en circulation.

16. Procédé selon l'une des revendications 14, **caractérisé en ce que** le fluide de désoprtion est un gaz amené sélectivement à l'entrée de l'unité d'épuration à désorber par un circuit auxiliaire (12).

## Claims

1. A device for scrubbing gaseous effluents containing unwanted substances, including an enclosure (3), a first line (1) for channelling the effluents towards a scrubbing barrier placed across the enclosure, including several scrubbing units (4a to 4n) containing a material suitable for adsorbing and concentrating the said substances, at least a second line for discharging the filtered effluents from the enclosure and devices (6) for establishing a circulation of effluents through the enclosure, comprising a mobile combined assembly (8, 10) placed in the enclosure downstream from the scrubbing barrier (4), working in association with a means of feeding a desorption fluid upstream from the barrier, that performs both selective thermal desorption of at least one scrubbing unit and destruction of the substances obtained by selective desorption.

2. A device according to Claim 1, **characterised in that** the mobile combined assembly includes a reactor (10) for incinerating the substances obtained by selective desorption, associated with a collector (8) and a means of providing motion.

3. A device according to Claim 2, wherein the incineration reactor (10) is of the catalytic type.

4. A device according to one of Claims 1 to 3, **characterised in that** the means of feeding a desorption fluid is the first line (1) channelling the effluents to be scrubbed.

5. A device according to one of Claims 1 to 3, **characterised in that** the means of feeding a desorption fluid is an aeraulic duct (12) placed partly outside the enclosure and connected to a divergent section (11) that can move with the mobile combined assembly.

6. A device according to one of the previous Claims, **characterised in that** the mobile combined assembly (8, 10) includes a means of heating the adsorbing material included in each scrubbing unit.

7. A device according to Claim 6, **characterised in that** the means of heating includes a set of electrical resistances within the adsorbent.

8. A device according to Claim 6, **characterised in that** the means of heating uses the Joule effect.

9. A device according to one of the previous Claims, **characterised in that** the mobile combined assembly includes means of heating placed outside each scrubbing unit.

10. A device according to one of the previous Claims, **characterised in that** the means of heating includes at least one source of infrared rays.

11. A device according to Claims 2 to 9, **characterised in that** the means of heating includes at least one source of infrared rays which is the incineration reactor (10).

12. A device according to one of the previous Claims, **characterised in that** each scrubbing unit includes several perforated compartments (19) containing adsorbent and deflecting plates (20) to increase the contact surface between the effluents and the adsorbent material.

13. A device according to one of the previous Claims, **characterised in that** the selective thermal desorption assembly includes movement devices to position the collector opposite the scrubbing unit to be desorbed and hold it against the scrubbing unit.

14. A process for scrubbing gaseous effluents containing unwanted substances, wherein the effluents to be scrubbed are directed towards a scrubbing barrier placed across the enclosure, including several scrubbing units (4a to 4n) containing a material suitable for adsorbing and concentrating the said substances and the various scrubbing units are selectively and successively isolated by means of a mobile collector (8) when the adsorbent charge thereof is saturated so as to pass a desorbent fluid through, **characterised in that** it includes selective thermal desorption of at least one combined scrubbing unit with destruction within the enclosure of the substances obtained by selective desorption.

15. A process according to Claim 14, **characterised in that** the desorption fluid is a fraction of the circulating effluents.

16. A process according to Claim 14, **characterised in that** the desorption fluid is a gas delivered selectively to the inlet of the scrubbing unit to be desorbed through an auxiliary circuit (12).

## Patentansprüche

1. Vorrichtung zum Reinigen der gasförmigen unerwünschte Substanzen enthaltenden Abströme, umfassend: ein Gefäß (3), eine erste Leitung (1) zum Kanalisieren der Abströme gegen eine Reinigungsbarriere, die quer zum Gefäß angeordnet ist und eine Vielzahl von Reinigungseinheiten (4a-4n) umfaßt, die ein Material enthalten, das eingerichtet ist, um diese Substanzen zu adsorbieren und zu konzentrieren, wenigstens eine zweite Leitung zum Abziehen der gefilterten Abströme aus dem Gefäß sowie Mittel (6) zur Herstellung einer Zirkulation von Abströmen quer durch das Gefäß, **dadurch gekennzeichnet, dass** sie eine kombinierte mobile Anordnung (8, 10) umfaßt, die im Gefäß hinter der Reinigungsbarriere (4) angeordnet ist und mit einem Mittel zum Zuführen eines Desorptionsfluids vor diese Barriere zusammenwirkt, welches gleichzeitig eine thermische selektive Desorption wenigstens einer Reinigungseinheit und eine Zerstörung der durch die selektive Desorption erhaltenen Substanzen realisiert.

2. Vorrichtung nach Anspruch 1, **dadurch gekennzeichnet, dass** die bewegliche kombinierte Anordnung einen Reaktor (10) zur Veraschung der durch die selektive Desorption erhaltenen Substanzen, zugeordnet zu einem Sammler (8) und Translationsmitteln umfaßt.

3. Vorrichtung nach Anspruch 2, **dadurch gekennzeichnet, dass** der Veraschungsreaktor (10) vom katalytischen Typ ist.

4. Vorrichtung nach einem der Ansprüche 1 bis 3, **dadurch gekennzeichnet, dass** das Mittel zum Zuführen des Desorptionsfluids die erste, die zu reinigenden Abströme kanalisierende Leitung (1) ist.

5. Vorrichtung nach einem der Ansprüche 1 bis 3, **dadurch gekennzeichnet, dass** das Mittel zum Zuführen des Desorptionsfluids eine aeraulische Leitung (12) ist, die teilweise außerhalb des Gefäßes angeordnet und mit einer Divergenzausbildung (11) verbunden ist, die mit der beweglichen kombinierten Anordnung verschiebbar ist.

6. Vorrichtung nach einem der vorhergehenden Ansprüche, **dadurch gekennzeichnet, dass** die bewegliche kombinierte Anordnung (8, 10) Mittel zur Erwärmung des adsorbierenden Materials, eingeschlossen in jeder Reinigungseinheit, umfaßt.

7. Vorrichtung nach Anspruch 6, **dadurch gekennzeichnet, dass** die Heizmittel eine Anordnung elektrischer Widerstände inmitten des Adsorptionsmittels umfaßt.

8. Vorrichtung nach Anspruch 6, **dadurch gekennzeichnet, dass** die Heizmittel vom Typ mit Joule-Effekt sind.

9. Vorrichtung nach einem der vorherigen Ansprüche, **dadurch gekennzeichnet, dass** die bewegliche kombinierte Anordnung (8, 10) Heizmittel umfaßt, die außerhalb jeder Reinigungseinheit angeordnet sind.

10. Vorrichtung nach einem der vorherigen Ansprüche, **dadurch gekennzeichnet, dass** die Heizmittel wenigstens eine Quelle für Infrarotstrahlen umfaßt.

11. Vorrichtung nach einem der Ansprüche 2 bis 9, **dadurch gekennzeichnet, dass** die Heizmittel wenigstens eine Infrarotquelle umfassen, welche durch den Veraschungsreaktor (10) gebildet ist.

12. Vorrichtung nach einem der vorherigen Ansprüche, **dadurch gekennzeichnet, dass** jede Reinigungseinheit mehrere perforierte Adsorbens enthaltende Kammern (19) sowie ablenkende Trennwände (20) zur Vergrößerung der Kontaktfläche der Abströme mit dem adsorbierendem Material umfaßt.

13. Vorrichtung nach einem der vorherigen Ansprüche, **dadurch gekennzeichnet, dass** die thermische selektive Desorptionsanordnung Antriebsmittel umfasst, um den Sammler gegenüber der gesamten zu desorbierenden Reinigungseinheit zu positionieren und ihn gegen sie zu beaufschlagen.

14. Verfahren zum Reinigen der gasförmigen unerwünschte Substanzen enthaltenden Abströme, bei denen man die zu reinigenden Abströme gegen eine Reinigungsbarriere führt, welche quer zu einem Gefäß angeordnet ist, und eine Vielzahl von Reinigungseinheiten (4a bis 4n) umfaßt, die ein Material enthalten, das so ausgebildet ist, dass es diese Substanzen adsorbiert und konzentriert und dass man selektiv und nacheinander vermittels eines beweglichen Sammlers (8) die verschiedenen Reinigungseinheiten isoliert, wenn ihre adsorbierende Charge gesättigt ist, um hierin ein Desorptionsfluid zu führen, **dadurch gekennzeichnet, dass** es eine selektive thermische Desorption wenigstens einer Reinigungseinheit kombiniert mit einer Zerstörung der durch die selektive Desorption erhaltenen Substanzen im Inneren des Gefäßes umfaßt.

15. Verfahren nach Anspruch 14, **dadurch gekennzeichnet, dass** das Desorptionsfluid eine Fraktion der in Zirkulation befindlichen Abströme ist.

16. Verfahren nach Anspruch 14, **dadurch gekennzeichnet, dass** das Desorptionsfluid ein selektiv an den Eingang der zu desorbierenden Reinigungseinheit durch einen Hilfskreis zugeführtes Gas ist.
